# EUROPEAN PATENT APPLICATION

(11) **EP 4 418 757 A1**
(43) Date of publication of application: **21.08.2024**
(21) Application number: 23157281.9
(22) Date of filing: 17.02.2023
(51) Int. Cl.: H04W 52/16, H04W 52/14, H04W 52/02

(54) **USER EQUIPMENT, BASE STATION, METHOD FOR USER EQUIPMENT, AND METHOD FOR BASE STATION**

(71) Applicant: Panasonic Intellectual Property Corporation of America, Torrance, CA 90504 (US)
(72) Inventor: LI, Hongchao, Langen (DE); SUZUKI, Hidetoshi, Osaka (JP)
(74) Representative: Grünecker Patent- und Rechtsanwälte PartG mbB

(57) **Abstract**

The disclosure relates to a user equipment, UE, a base station, and respective methods for a UE and a base station. More specifically, the UE comprises a transceiver which, in operation, receives a power level indicator from a base station, wherein the power level indicator indicates a power level of a Channel Status Information-Reference Signal, CSI-RS, resource and/or whether or not the CSI-RS resource is to be transmitted by the base station. The UE further comprises circuitry which, in operation, operates according to the power level and/or according to whether or not the CSI-RS resource is to be transmitted by the base station.

## Description

### BACKGROUND

### 1. Technical field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

### SUMMARY

One non-limiting and exemplary embodiment facilitates reduction of network power consumption, wherein at the same time procedures performed by a UE are not affected by measures taken by a base station.

In an embodiment, the techniques disclosed here feature a user equipment, UE. The UE comprises a transceiver which, in operation, receives a power level indicator from a base station. The power level indicator indicates a power level of a Channel Status Information-Reference Signal, CSI-RS, resource and/or whether or not the CSI-RS resource is to be transmitted by the base station. The UE further comprises circuitry which, in operation, operates according to the power level and/or according to whether or not the CSI-RS resource is to be transmitted by the base station.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming;
- **Fig. 6a**: is a schematic drawing illustrating aspects of digital beamforming;
- **Fig. 6b**: is a schematic drawing illustrating aspects of analog beamforming;
- **Fig. 7**: is a block diagram of a communication system including a user equipment and a base station with their respective structure;
- **Fig. 8a**: is a block diagram illustrating functional structure of the processing circuitry at the user equipment side;
- **Fig. 8b**: is a block diagram illustrating functional structure of the processing circuitry at the base station side;
- **Fig. 9**: is a flow chart illustrating exemplary steps performed by a user equipment as well as exemplary steps performed by a base station;
- **Fig. 10**: is a schematic drawing illustrating an example of signaling the power level indicator via a group-common DCI;
- **Fig. 11**: is a flow chart illustrating exemplary steps performed by a UE; and
- **Fig. 12**: is a schematic drawing illustrating another example of signaling the power level indicator via a group-common DCI.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

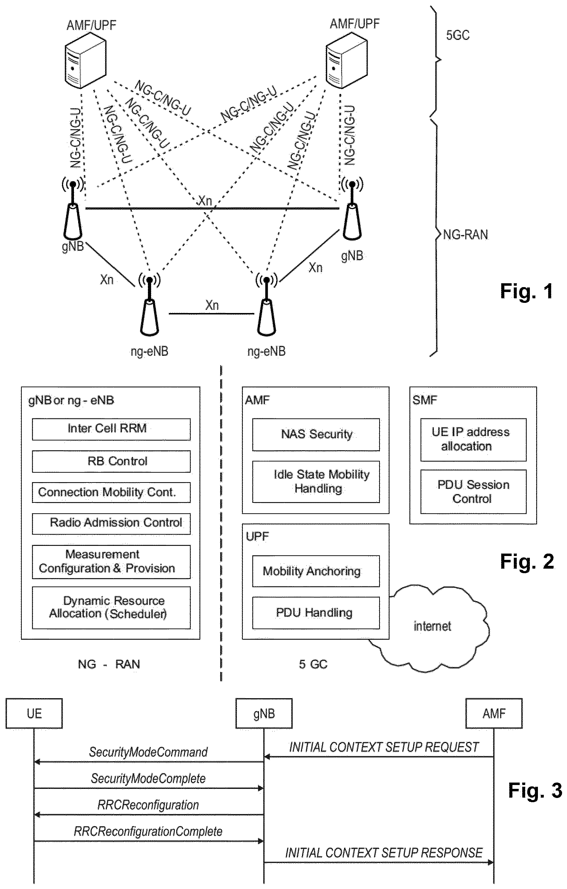

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

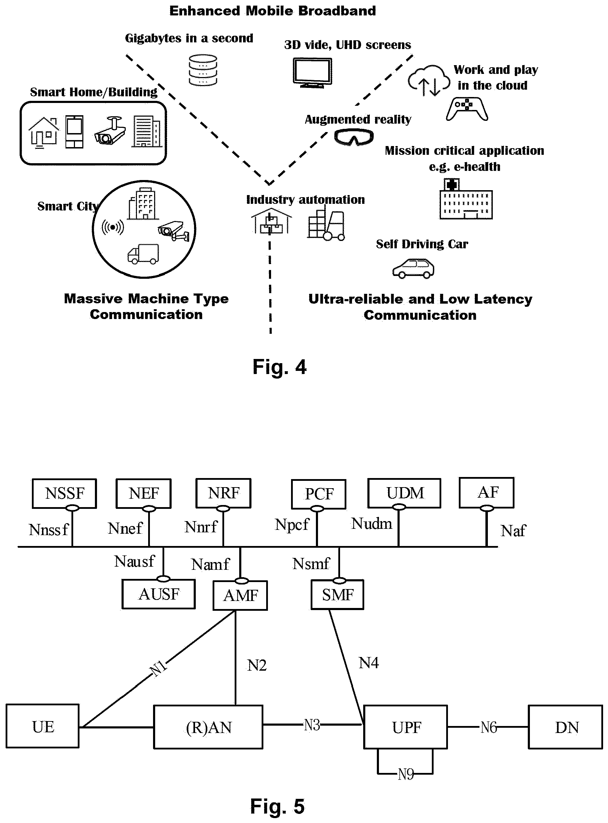

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. **Fig. 4** illustrates some examples of envisioned usage scenarios for IMT for 2020 and beyond (see e.g. ITU-R M.2083 **Fig. 2****).**

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB).

Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in **Fig. 4****,** interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a scheduling node or network node, e.g. forming a part of the network for providing services to terminals. In particular, a base station may provide wireless access to terminals. Communication between the terminal and the base station is typically standardized and may be defined by different layers, such as PHY, MAC, RRC etc. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term base station or radio base station here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

### Frequency Bands

The present disclosure may be applied to any of a licensed band and an unlicensed band.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### HARQ-ACK

HARQ-ACK (Hybrid Automatic Repeat Request - Acknowledgement) is a signaling mechanism used in wireless communication networks to enable error correction and retransmission of data. It allows the receiving device to notify the sending device whether a transmitted packet was successfully received or not, so that the sender can either send the next packet or retransmit the same packet. HARQ-ACK feedback may allow for efficient use of a wireless channel and helps to improve data transmission reliability.

### Reference Signals

In the present disclosure, the reference signals are signals known to both a base station and a UE and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Channel State Information - Reference Signal (CSI-RS)

CSI-RS (Channel State Information Reference Signal) is a signal used in LTE and 5G NR to measure the quality of the wireless channel between the UE and the base station. It may be transmitted periodically by the base station on specific resource elements (resources) in the frequency domain, and the UE uses the received CSI-RS to estimate channel quality, which can be used for beamforming and other techniques. The UE can also use CSI-RS for feedback to the base station, indicating the modulation and coding scheme that can be supported on the current channel. CSI-RS is a component to provide high data rates and reliable communication.

### CSI-RS resource set group

The CSI-RS resource set group is a concept that refers to a group of CSI-RS resource sets with similar transmission characteristics. CSI-RS resource set groups may be used to optimize the transmission efficiency and reduce the overhead associated with individualized control signaling. It may allow the base station to transmit a single CSI-RS resource set for multiple antennas or transmission points, thereby reducing the number of control signals required for beamforming and other transmission optimization techniques.

The CSI-RS resource set group is characterized by a unique identifier, known as the CSI-RS Configuration Index (CRI). The CRI is used by the UE to identify the CSI-RS resource set group and the associated transmission characteristics. The CSI-RS resource set group can be used for a variety of transmission parameters, including beamforming, channel quality measurement, and handover.

### CSI reporting

CSI reporting, e.g. in LTE or 5G NR, is a mechanism by which the UE may provide feedback to the base station about the quality of the radio channel. For this purpose, the UE estimates the channel quality based on the reference signals sent by the base station, and reports this information to the base station.

CSI reporting in 5G NR is more advanced than in LTE and includes a variety of feedback types and reporting configurations. The UE estimates the channel quality based on the reference signals, including the CSI-RS and the DMRS (Demodulation Reference Signal), sent by the base station. The UE then reports this information to the base station using one or more feedback types, such as:
- Periodic CSI feedback: the UE sends CSI feedback at regular intervals and offset specified by the base station.
- Aperiodic CSI feedback: the UE sends CSI feedback when triggered by the base station.
- Semi-persistent CSI feedback: the UE sends CSI feedback periodically with a periodicity and a certain offset configured by base station, which can be triggered or stopped by the base station, allowing the base station to anticipate when feedback will be received.

The feedback types can be configured with different reporting configurations, which include the number of bits used to encode the feedback, the frequency of feedback reporting, and the aggregation of multiple subcarriers or antennas.

The base station may use the CSI feedback to adapt the transmission parameters, such as the modulation and coding scheme, to the current channel conditions. CSI reporting is a mechanism for achieving high data rates and efficient use of the radio spectrum in 5G NR.

### Power loss estimation

Power loss estimation in 5G NR refers to a mechanism by which the UE estimates the power loss in the radio channel between the UE and the base station. This estimation is important for determining the appropriate transmission power levels to achieve the desired quality of service and minimize interference.

The UE estimates the power loss based on the reference signals, such as the CSI-RS, sent by the base station. The power loss estimation is typically done using the Channel Quality Indicator (CQI) or the Reference Signal Received Power (RSRP), which provide information about the quality of the channel and the received signal strength, respectively.

The power loss estimation may be used by the UE to adjust the transmission power levels and improve the quality of the received signal. The UE can use different power levels for different transmissions or antenna ports, depending on the estimated power loss.

The base station can also use the power loss estimation to adjust the transmission parameters, such as the beamforming vectors, to improve the quality of the transmitted signal and reduce interference.

Power loss estimation is an important aspect of wireless communication systems like LTE and 5G NR, as it enables efficient use of the radio spectrum and improved quality of service for users.

### Uplink power control

Uplink power control refers to the process of adjusting the transmit power of a UE in the uplink direction, so that the signal received by the base station is neither too weak nor too strong. This is done to ensure efficient use of radio resources and to maintain a target quality of service (QoS) for the UE. The power control can be either open-loop or closed-loop.

In open-loop power control, the UE adjusts its transmit power based on a power control offset without any feedback from the base station. In closed-loop power control, the base station provides feedback to the UE to more accurately adjust the transmit power based on the channel conditions. The closed-loop power control mechanism may be based on the channel quality indicator (CQI) feedback from the base station. The UE uses the CQI to adjust its transmit power to maintain a target signal-to-noise ratio (SNR) at the base station. The CQI feedback is typically sent periodically from the base station to the UE, and the UE adjusts its transmit power based on the most recent CQI value.

### Downlink control information (DCI)

DCI (Downlink Control Information) is a message sent by the base station to the UE on the Physical Downlink Control Channel (PDCCH) to convey downlink control information. The DCI provides the UE with information about the modulation and coding scheme, resource allocation, power control, and other transmission parameters that are necessary for the UE to decode the received data.

The DCI format is defined by the 5G NR standard and consists of multiple fields that convey specific information. The fields include the following:
- Format indicator (FI): Indicates the format of the DCI.
- Resource indicator (Rl): Indicates the resource allocation, such as the time-frequency resources, antenna ports, and precoding information.
- Modulation and coding scheme (MCS): Indicates the modulation scheme and coding rate used for the transmission.
- New data indicator (NDI): Indicates whether the transmission carries new data or retransmitted data.
- Hybrid automatic repeat request (HARQ) process number: Indicates the HARQ process number used for the transmission.
- Power control command (PUCCH/PUSCH): Indicates the power control command for the uplink or downlink transmission.
- Scheduling assignment: Indicates the scheduling assignment for the UE, including the time-frequency resources, modulation and coding scheme, and other transmission parameters.
- Scheduling request (SR): Indicates the scheduling request for the UE to request uplink resources.

The DCI can have different formats and configurations, depending on the specific use case and the available radio resources. The base station uses the DCI to control the downlink transmission and allocate resources to the UEs. The UE uses the information in the DCI to configure its receiver and process the received data.

The DCI is transmitted in a dynamic and flexible manner, which enables efficient use of the radio spectrum and supports a variety of use cases and services. The base station can use different DCI formats and configurations to support services such as eMBB (enhanced Mobile Broadband), URLLC (Ultra-Reliable Low-Latency Communications), and mMTC (massive Machine Type Communications).

### UE-specific DCI

UE-specific DCI is a type of DCI message that is transmitted by the base station to a specific UE to control the downlink transmission on a per-UE basis. UE-specific DCI contains information specific to a particular UE, such as its identification, the number of resource blocks allocated, and the modulation and coding scheme to be used.

UE-specific DCI is transmitted on the Physical Downlink Control Channel (PDCCH) and includes information about the modulation and coding scheme, resource allocation, power control, and other transmission parameters. The UE uses the information in the UE-specific DCI to configure its receiver and process the received data.

The UE-specific DCI format includes a UE identity, which identifies the UE that the DCI message is intended for. The UE identity is used by the UE to determine whether the DCI message is intended for it or not.

The use of UE-specific DCI is particularly beneficial in cases where the UEs have different transmission requirements, such as in a mixed-service environment where different UEs may have different quality-of-service (QoS) requirements.

UE-specific DCI is may enable efficient and reliable communication on a per-UE basis. It may further allow the base station to control the downlink transmission for individual UEs, taking into account the specific transmission parameters and the interference conditions in the cell. This ensures that each UE receives an optimal signal and maximizes the efficiency of the downlink transmission.

### Group-common DCI

Group-common DCI is a type of DCI message that is transmitted by the base station to a group of UEs that share the same set of transmission parameters. Group-common DCI is used to optimize the transmission efficiency and reduce the overhead associated with individualized control signaling.

Group-common DCI may convey the same set of transmission parameters to a group of UEs, which enables them to use the same transmission settings for data reception. This reduces the overhead associated with individualized signaling, as the base station only needs to transmit one DCI message to control the transmission for a group of UEs.

The group-common DCI format may include a group identifier (GID), which is used to identify the group of UEs that share the same transmission parameters. The GID is used by the UEs to determine whether the DCI message is intended for them or not.

The use of group-common DCI is particularly beneficial in cases where a large number of UEs share the same transmission parameters, such as in multicast or broadcast scenarios. Hence, as it enables efficient and scalable control signaling for a variety of use cases and services. It reduces the signaling overhead and enables the base station to efficiently control the downlink transmission for groups of UEs with the same transmission parameters.

### Cell-specific DCI

Cell-specific DCI is a type of DCI message that is transmitted by the base station to a UE to control the downlink transmission on a per-cell basis. Cell-specific DCI contains information specific to a particular cell, such as the physical cell identity (PCI), frequency, and reference signal configuration.

Cell-specific DCI is transmitted on the Physical Downlink Control Channel (PDCCH) and includes information about the modulation and coding scheme, resource allocation, power control, and other transmission parameters. The UE uses the information in the cell-specific DCI to configure its receiver and process the received data.

The cell-specific DCI format includes a cell identity (ID), which identifies the cell that the DCI message is intended for. The cell ID is used by the UE to determine whether the DCI message is intended for it or not.

The use of cell-specific DCI is particularly beneficial in cases where the UEs are located in close proximity to each other and may receive signals from multiple cells. Cell-specific DCI may enable efficient and reliable communication on a per-cell basis. It may allow the base station to control the downlink transmission for UEs, taking into account the specific transmission parameters and the interference conditions in the cell. This ensures that each UE receives an optimal signal and maximizes the efficiency of the downlink transmission.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Beamforming

Beamforming enables directional transmission of data between the base station and the UE. It may allow the base station to focus the transmission energy in the direction of the UE, which increases the signal quality and improves the overall system performance.

In 5G NR, beamforming is achieved using advanced signal processing techniques, such as precoding and MIMO (Multiple-Input Multiple-Output). Precoding is used to optimize the transmission signal by adjusting the amplitude and phase of the signal to maximize the signal strength in the direction of the UE. MIMO is used to increase the signal quality by using multiple antennas at the base station and the UE, which allows for spatial multiplexing and diversity.

Beamforming can be achieved using two main techniques: analog and digital beamforming. Analog beamforming is performed in the RF (Radio Frequency) domain and involves adjusting the phase and amplitude of the signal at the antenna level. Digital beamforming is performed in the baseband domain and involves processing the signal digitally before it is transmitted to the antenna.

### Digital beamforming

Digital beamforming is a technique used to direct the transmission of data between the base station and the UE in a specific direction. Digital beamforming is performed in the baseband domain and involves processing the signal digitally before it is transmitted to the antenna.

Digital beamforming involves three main steps: channel estimation, precoding, and power amplification. Channel estimation is performed to determine the channel response between the base station and the UE. Precoding is then applied to optimize the transmission signal by adjusting the amplitude and phase of the signal to maximize the signal strength in the direction of the UE. Finally, the precoded signal is amplified and transmitted to the antenna.

One advantage of digital beamforming is that it allows for more precise control of the transmission signal, as the signal can be adjusted and optimized based on the channel conditions and the location of the UE. This results in improved signal quality and overall system performance.

Another advantage of digital beamforming is that it enables efficient use of MIMO (Multiple-Input Multiple-Output) technology. MIMO involves using multiple antennas at the base station and the UE to increase the signal quality by spatial multiplexing and diversity. Digital beamforming allows the base station to optimize the transmission to the UE based on the channel conditions and the location of the UE, which improves the overall system performance and enables new use cases and services.

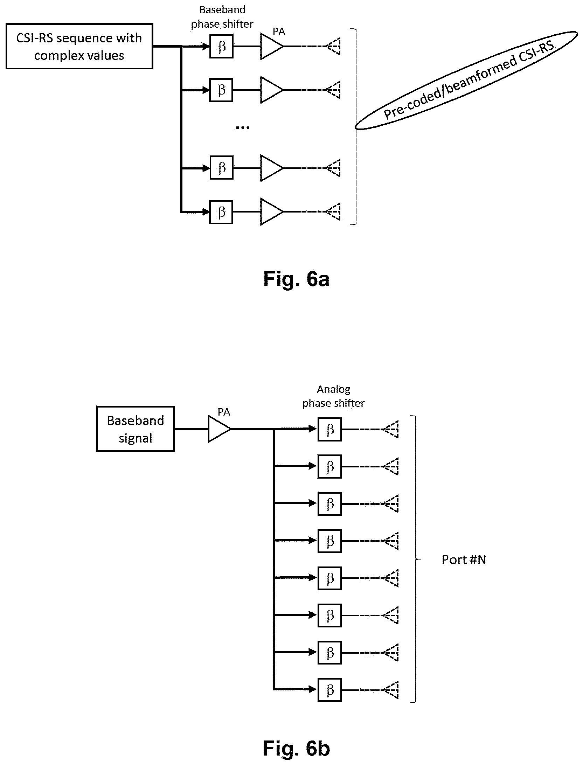

**Fig. 6a** is a schematic drawing illustrating the principals of digital beamforming for transmission of a CSI-RS. A CSR-RS sequence with complex values is provided to each of a plurality of baseband phase shifters and a plurality of downstream power amplifiers (PA). The base station adjusts the phase and amplitude of the signal at each antenna to create directional beams that are focused on the UE. The complex signal processing required for digital beamforming is typically performed using advanced signal processing algorithms, such as beamforming algorithms designed to optimize the signal quality. The phase shifted and amplified signals are then led to antenna elements in order to form the pre-coed/beamformed CSI-RS.

### Analog beamforming

Analog beamforming involves the use of an array of antennas at the base station, which can be used to create directional beams that are focused on the UE. By adjusting the phase and amplitude of the signal at each antenna, the beam can be steered in a specific direction. This allows the base station to direct the transmission energy in the direction of the UE.

One advantage of analog beamforming is that it is a simpler and more cost-effective approach than digital beamforming. It does not require complex signal processing and can be implemented using relatively simple hardware.

However, analog beamforming has some limitations compared to digital beamforming. For example, it is less flexible and less precise than digital beamforming, as it cannot adjust the transmission signal based on the channel conditions and the location of the UE. Additionally, analog beamforming is less efficient than digital beamforming in using MIMO (Multiple-Input Multiple-Output) technology, as it cannot take full advantage of the spatial diversity that MIMO provides.

**Fig. 6b** is a schematic drawing illustrating the principals of analog beamforming for transmission of a CSI-RS. In contrast to the digital beamforming approach illustrated in Fig. 6a, a baseband signal is fed to a power amplifier (PA). The resulting amplified signal output by the PA is provided to each of a plurality of analog phase shifters, which are connected to a plurality of antenna elements, respectively. That is, in analog beamforming, the base station adjusts the phase of the signal at each antenna to create directional beams that are focused on the UE. This is done by using phase shifters, which are passive components that introduce a phase delay in the signal path.

### Quasi-Colocation (QCL)

Quasi-Colocation (QCL) refers to the situation where multiple antennas or transmission points are located close enough to each other that the channel response is similar. Two antenna ports are said to be quasi co-located (QCLed) if properties of the channel over which a symbol on one antenna port is conveyed can be inferred from the channel over which a symbol on the other antenna port is conveyed

QCL may be used to optimize the beamforming and precoding by reducing the signaling overhead and the complexity of the transmission optimization. By grouping together antennas or transmission points that are close enough to each other to have similar channel responses, the base station can use the same beamforming and precoding weights for all antennas in the group, which simplifies the transmission optimization process.

QCL can be applied to a variety of transmission scenarios, including multi-user MIMO (Multiple-Input Multiple-Output) and beamforming. In multi-user MIMO, QCL can be used to group together the antennas or transmission points of multiple UEs that are located close to each other, which may simplify the transmission optimization and improves the overall system performance.

### TCI states

TCI (Transmission Configuration Indication) state refers to the way in which the UE is configured to receive data from the base station using a specific resource allocation pattern. The TCI state is signaled by the base station to the UE through the DCI.

The TCI state is used to optimize the transmission of data to the UE by adjusting the resource allocation pattern based on the channel conditions and the location of the UE. The TCI state determines the resource allocation pattern for different types of data and how it is transmitted to the UE, which helps to maximize the signal quality and overall system performance.

The base station determines the appropriate TCI state to use based on the channel conditions and the location of the UE. The TCI state is then signaled to the UE through the DCI, which configures the UE to receive the data using the appropriate resource allocation pattern.

TCI states may be dynamically sent in a DCI message which includes configurations such as QCL-relationships between the DL RSs in one CSI-RS set and the PDSCH DMRS ports. A UE can be configured with a list of TCI-State configurations, wherein each TCI State contains parameters for configuring a quasi-colocation relationship between one or two downlink reference signals and the DM-RS ports of the PDSCH, the DM-RS port of PDCCH or the CSI-RS port(s) of a CSI-RS resource.

### Synchronization and Synchronization Signal Blocks (SSBs)

In NR downlink synchronization, a UE detects the radio boundary (i.e., the timing when a radio frame starts) and OFDM symbol boundary (i.e., the timing when an OFDM symbol starts). This is performed by detecting and analyzing Synchronization Signal Blocks (SSBs). The components of an SSB include synchronization signal, namely a Primary Synchronization Signal (PSS) and a Secondary Synchronization Signal (SSS). The NR SSB may be transmitted in various different patterns, depending on numerology and some other parameters. The pattern is signaled within system information.

In NR, the TRS may be provided as a dedicated RS to a UE or as a common RS for a plurality of UEs in connected mode. Based on the TRS, the UE(s) may be able to perform a finer adjustments of the synchronization, without necessity to always receive the synchronization signal.

In some systems such as NR (e.g. Rel. 15/16), a TRS/CSI resource is configured for a UE to be utilized in measurements, e.g. for channel state estimation, time tracking, frequency tracking, and/or beam tracking, by the UE in RRC_CONNECTED mode. For UEs in other modes, RRC_IDLE and RRC_INACTIVE, such measurements may rely on the SSB. For Rel.17 NR, TRS/CSI-RS may also be used by some INACTIVE/IDLE UEs for time and frequency tracking, who supports this feature of additional TRS/CSI-RS occasions informed to these UEs. Thus, in general, TRS/CSI and SSB are signals that may be used by a UE, in any RRC state, for channel state estimation, time tracking (e.g. time synchronization), frequency tracking, and/or beam tracking.

In general, an SSB may be transmitted in a particular (spatial) direction, in which case the SSB may also be referred to as "SSB beam". In particular, each SSB/SSB beam may also have and/or indicate a beam index (also known as SSB index) that can be used to distinguish said SSB beam from other SSB beams, transmitted in other direction than said SSB beam. A UE may then determine, based on the received signal of the SSB beam, the SSB index of the received SSB beam and determine the direction in which it was transmitted by the base station.

In general, the current SSB structure and signaling in SIB1 may be used, by the base station, to indicate to the UE the SSB beams that the base station is using. The base station may then inform, using an on/off indications, the UE which beams shall be switched on or off during which period of time.

### Network energy saving

CSI and beam management related procedures can be used to optimize the use of network resources, reduce energy consumption, and improve the overall performance of the network. Said procedures may include measurement and report, and signaling to enable efficient adaption of spatial elements like antenna ports or active transceiver chains. By implementing these procedures, the network may achieve a better balance between performance and energy consumption.

To save network energy, an operation option is to facilitate spatial element adaption. In other words, the number of active amplifiers used for antenna ports may be adapted. This approach may lead to an antenna or RS port or beam to be switched ON or OFF. In particular, in analog beamforming as illustrated in **Fig. 6b****,** when the PA is switched OFF, the RS port/beam is switched OFF and respective signaling is not transmitted. In digital beamforming, as illustrated in **Fig. 6a****,** antenna element adaption may lead to an adaption of the beam power level of respective antenna/RS port.

Further, in order to save network energy, the output power level of each PA may be adapted. In digital beamforming as well as in analog beamforming, this may lead to an adaption/reduction of the power level of respective antenna/RS port or beam.

In general, a base station may determine to reduce the power level of an antenna/RS port or beam depending on the number of UEs served. For example, the power level may be reduced the more UEs are served by the base station.

However, the adaption of spatial elements like ports, transceiver chain, PA may lead to multiple flaws. For example, when the UE reports CSI that does not include L1-RSRP/SINR, this may lead to a change of the number of CSI-RS ports and other configurations like a codebook for PMI that is used for CSI measurement and report. Further, in the case of digital beamforming using flexible antenna virtualization and in the case of analog beamforming, this may result in a change of the number of CSI-RS ports.

Further, when the CSI report includes L1-RSRP/SINR and beam management procedures, adapting the spatial elements may lead to a change of the beams that are to be measured and reported by the UE.

In addition, for digital beamforming, a varying number of used amplifiers and/or spatial elements leads to different power levels used for each beam7port as a reference, which is in turn reflected by EPRE of CSI-RS. Hence, spatial element adaption may lead to a different path loss estimation performed by the UE.

Moreover, a valid TCI state list may be changed due to spatial element adaption. In particular, when a downlink (DL) TCI state is associated with a configured SSB beam index or CSI-RS resource as a QCL reference, adapting the number of active amplifiers and/or antenna elements impacts the total number of beams and the configuration of a CSI-RS resource, ultimately leading to a change in the valid TCI state list.

When adapting the transmission (Tx) power of a CSI-RS, path loss calculation to be performed by the UE may be impacted when the UE uses the CSI-RS as a reference, due to a change in an offset between the power of the CSI-RS and the power of the SSS. Further, the calculation of the CQI may be impacted due to a change in the power offset between the CSI-RS and PDSCH.

That is, in summary, when the CSI-RS presence and/or the power level changes dynamically, procedures of the UE using the CSI-RS as a reference may be impacted.

### Embodiments

In the following, UEs, base stations, and procedures will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the base station is typically standardized and may be defined by different layers, such as PHY, MAC, RRC etc. (see above background discussion).

The present disclosure relates to a UE, a base station and methods of a UE and a base station that address issues related to network energy saving by spatial element adaption or transmission power adaption performed by a base station.

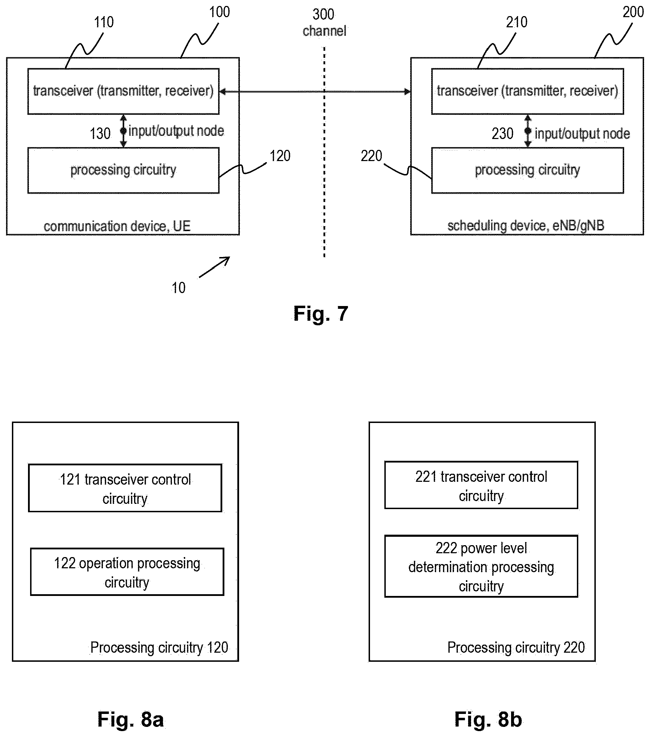

**Fig. 7** illustrates a general, simplified and exemplary block diagram of a user equipment 100 (also termed communication device) and a base station 200 which is here exemplarily assumed to be a scheduling device like an eNB or gNB (network node). However, in general, a scheduling device may also be a terminal in case of a sidelink connection between two terminals. Moreover, in particular with respect to the use cases of URLLC; eMBB, and mMTC, the communication device 100 may also be a sensor device, a wearable device, or a connected vehicle, or a controller of an automated machine in an industrial factory. Further, a communication device 200 may be able to function as a relay between base station and another communication device (e.g. the disclosure is not limited to communication "terminals" or user "terminals").

The UE 100 and the base station 200 (eNB/gNB) are communicating with each other over a (wireless) physical channel 300 respectively using their transceivers 110 (UE side) and 210 (base station side). Together, the base station 200 and the UE 100 form the communication system 10. The communication system 10 may further include other entities such as those shown in Fig. 1.

The UE 100 may comprise the transceiver 110 and a (processing) circuitry 120, and the scheduling device 200 may comprise the transceiver 210 and a (processing) circuitry 220. The transceiver 110, 210 in turn may comprise and/or function as a receiver and/or a transmitter. In this disclosure, in other words, the term "transceiver" is used for hardware and software components that allow the US 100, or, respectively base station 200 to transmit and/or receive radio signals over a wireless channel 300. Accordingly, a transceiver corresponds to a receiver, a transmitter, or a combination of receiver and transmitter. Typically, a base station and a UE are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc.

As shown in **Fig. 7****,** in some embodiments, the user equipment (UE) 100 comprises a transceiver 110 which, in operation, receives a power level indicator from a base station, wherein the power level indicator indicates a power level of a Channel Status Information-Reference Signal, CSI-RS, resource and/or whether or not the CSI-RS resource is to be transmitted by the base station; and circuitry 120 which, in operation, operates according to the power level and/or according to whether or not the CSI-RS resource is to be transmitted by the base station 200.

**Fig. 8a** shows a functional structure of the circuitry 120. In particular, it includes a transceiver control circuitry 121. The transceiver control circuitry 121, in operation, controls the transceiver 110. For example, the control of the transceiver 110 may include controlling the transceiver 110 to receive (detect) signaling transmitted by the base station 200 and including the power level indicator. In particular, the transceiver control circuitry 120 may control the transceiver 110 to decode the power level indicator. The circuitry 120 may include operation processing circuitry 122, which operates according to the power level and/or according to whether or not the CSI-RS resource is to be transmitted by the base station 200.

As also shown in Fig. 7, in some embodiments, the base station 200 comprises a circuitry 220. The circuitry 220, in operation, determines that a signalling that includes an availability indication is to be generated. The circuitry 220, in operation, determines a power level of a Channel Status Information Reference Signal, CSI-RS, resource and/or whether or not the CSI-RS resource is to be transmitted by the base station. Furthermore, the circuitry 220, in operation, generates the signaling including a power level indicator indicating the power level of the CSI-RS resource and/or whether or not the CSI-RS resource is to be transmitted by the base station 200, and the transceiver 210, in operation, transmits the generated signalling.

**Fig. 8b** shows a functional structure of the circuitry 220. In particular, circuitry 220 includes a transceiver control circuitry 221. The transceiver control circuitry 221, in operation, controls the transceiver 210. For example, the control may include controlling the transceiver 210 to transmit the power level indicator to the UE 100. The circuitry 2200 may include power level determination processing circuitry 222, which determines the power level of a Channel Status Information Reference Signal, CSI-RS, resource and/or whether or not the CSI-RS resource is to be transmitted by the base station 200. The transceiver control circuitry 221 then controls the transceiver 210 to transmit a signaling including the power level indicator.

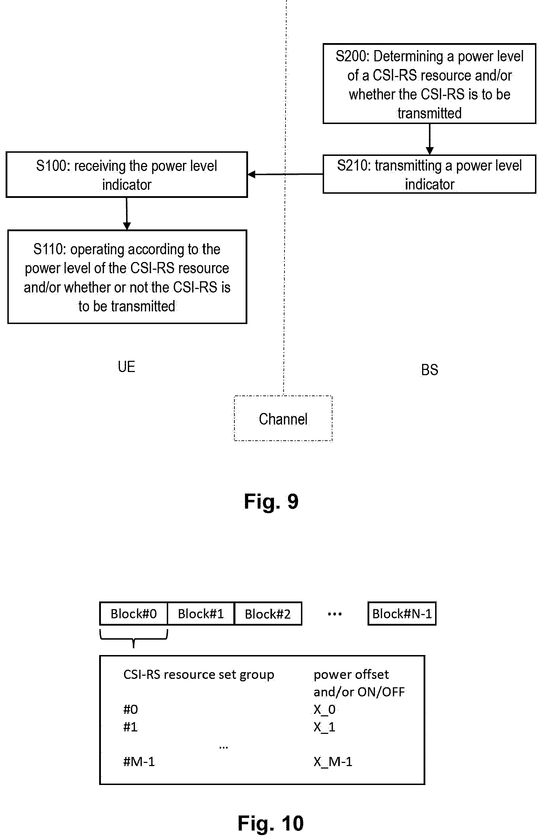

In correspondence with the above described base station 200, a communication method to be performed by a base station 200 (or scheduling device) is provided. As shown in **Fig. 9****,** the method comprises a step of (i) determining S200 a power level of a CSI-RS resource and/or whether or not the CSI-RS resource is to be transmitted by the base station 200; and (ii) transmitting S210 a power level indicator to a UE 100, wherein the power level indicator indicates the power level of the CSI-RS resource and/or whether or not the CSI-RS resource is to be transmitted by the base station.

Furthermore, in correspondence with the above described UE 100, a communication method to be performed by a UE 100 is provided. As shown in **Fig. 9****,** the method comprises a step of (i) receiving S100 a power level indictor from a base station 200, wherein the power level indicator indicates a power level of a Channel Status Information-Reference Signal, CSI-RS, resource and/or whether the CSI-RS resource is to be transmitted by the base station 200; and (ii) operating S110 according to the power level and/or according to whether or not the CSI-RS resource is to be transmitted by the base station 200.

### Circuitries

The circuitries 120, 220 (or processing circuitries) may be one or more pieces of hardware such as one or more processors or any LSIs. Between the transceiver 110, 210 and the processing circuitry 120, 220 there is an input/output point (or node) 130, 230 over which the processing circuitry 120, 220, when in operation, can control the transceiver 110, 210, i.e. control the receiver and/or the transmitter and exchange reception/transmission data. The transceiver 110, 210, as the transmitter and receiver, may include the RF (radio frequency) front including one or more antennas, amplifiers, RF modulators/demodulators and the like. The processing circuitry 120, 220 may implement control tasks such as controlling the transceiver 110, 210 to transmit user data and control data provided by the processing circuitry 120, 220 and/or receive user data and control data that is further processed by the processing circuitry 120, 220. The processing circuitry 120, 220 may also be responsible for performing other processes such as determining, deciding, calculating, measuring, etc. The transmitter may be responsible for performing the process of transmitting and other processes related thereto. The receiver may be responsible for performing the process of receiving and other processes related thereto.

It is noted that the circuitries 120, 220 may be a general processing circuitry including one or more processors which may execute code instructions stored in a memory (which may be also part of the circuitry 120, 220) and which may include portions of the code instructions corresponding to the functionality described above with reference to respective circuitry. The functionality may be provided by hardware adaption and/or by software. The present disclosure is not limited to any particular circuitry and embodiments of the disclosure may include dedicated or programmable hardware or general purpose hardware or any combination thereof.

It is further noted that any of the steps/operations described below may be performed or controlled by the circuitry 120 (on the UE 100 side) and/or the circuitry 220 (on the base station 200 side). In particular, in the further description, the details and embodiments apply to each of the UE 100, the base station 200 and the methods unless explicit statement or context indicates otherwise.

### First embodiment

In the first embodiment, a UE 100 comprises a transceiver 110 which, in operation, receives a power level indicator from a base station 200, wherein the power level indicator indicates a power level of a Channel Status Information-Reference Signal, CSI-RS, resource and/or whether or not the CSI-RS resource is to be transmitted by the base station 200. The UE 100 further comprises circuitry 120 which, in operation, operates according to the power level and/or according to whether or not the CSI-RS resource is to be transmitted by the base station 200. In particular, the power level represents a power offset between a transmitted power of the CSI-RS and a transmitted power of a synchronization signal.

In the following, the power offset between the transmitted power of the CSI-RS and a transmitted power of a synchronization signal is referred to as a first power offset. The indication whether the CSI-RS resource is to be transmitted by the base station 200 is also referred as a CSI-RS resource ON/OFF indication. That is, the power level indicator may indicate the first power offset and/or the CSI-RS resource ON/OFF indication. The power level indicator is not required to indicate the power level/the CSI-RS resource ON/OFF indication directly, but may represent a value that is associated with a (as predetermined or configured) first power offset value or power offset resource ON/OFF indication.

That is, the UE 100 is provided with information on a difference (first power offset) between the transmitted power of the CSI-RS and a synchronization signal, which may be an SSS. The transmitted power may be the power used to transmit the respective radio signal from the base station 200 to the UE 100. It may be measured in Watts (W), decibels (dB) or any other suitable unit. The power of the respective signal as received by the UE 100 is referred to as received power.

The power level indicator indicates the offset (difference) between the transmitted power of the CSI-RS and the transmitted power of the SSS and may also be measured using W, dB or the like.

For example, each of one or more CSI-RS resource sets may be associated with a power level and/or whether a respective CSI-R resource is to be transmitted (CSI-RS resource ON/OFF indication). The transceiver 110, in operation, receives a CSI-RS resource set indicator indicating a CSI-RS resource set as the power level indicator.

In the first embodiment, the UE 100 receives the power level indicator via a group-common DCI. However, the present disclosures is not limited thereto, the power level indicator may be received via a UE-specific DCI, a group-common DCI or a MAC control element, MAC CE.

The UE 100 is configured with one or more starting positions of one or more blocks in a DCI and/or one or more indices of the block. The power level indicator is received via the DCI according to the starting position and/or the one or more indices of the block. In each block, the number of CSI-RS resource set groups, group ID per CSI-RS resource set and bit-width of the indication for each group are RRC configurable.

**Fig. 10** is a schematic drawing illustrating an example of signaling the power level indicator via a group-common DCI. The UE is configured with a correspondence relationship between one or more CSI-RS resource set groups and respective one or more first power offsets and/or CSI-RS resource ON/OFF indications. In other words, each CSI-RS resource set group is associated with a first power offset and/or whether or not the CSI-RS resource is to be transmitted by the base station. Said correspondence relationship may be fixed or RRC configured, for example.

That is, for each indication field of each block and each CSI-RS resource set group, candidate values of the CSI-RS resource ON/OFF indication and/or the first power offset as selected or indicated by DCI can be fixed or RRC configured.

In an example, a first offset value of minus infinity (-∞) in dB indicates that a PA/element is switched OFF, which corresponds to an amplifier or antenna element being turned OFF and, for analog beamforming, a transmission and reception point (TRP) level being zero. In other words, a power level of minus infinity may indicate that the CSI-RS resource is not to be transmitted by the base station. Further, candidate values of the first power offset may include -3 dB, -6 dB, -9 dB and so on. Said values may represent the reduction of an amplifier power or muting/turning OFF of half, 3/4 or 7/8, respectively, of the power amplifiers.

The power level indicator may indicate the first offset as a relative offset value or an absolute offset value. That is, the UE 100 may determine the first offset by adding the first indicated by the power level indicator to an already configured power level or EPRE (Energy Per Resource Element) (as configured by RRC, for instance) when the power level indicator indicates the first power offset in a relative manner. That is, the power level indicator may indicate the first power offset with respect to an already configured power level or EPRE. On the other hand, the power level indicator may indicate the first power offset in an absolute manner independent from an already configured power level/EPRE.

Further, the UE 100 may determine the first power offset in an open-loop (non-accumulated) or a closed-loop (accumulated) manner. That is, when multiple power level indicators (e.g. first and second power level indicator) are received by the UE 100, the first power offset may be determined by applying the power level indicator(s) independently from one another, either in a relative or an absolute manner, as described above. On the other hand, the UE 100 may determine the first power offset in an accumulated manner, wherein the second power level indicator (received after the first power level indicator) is applied to a first power offset determined previously using the first power level indicator.

In the signaling scheme as illustrated in **Fig. 10****,** the UE 100 receives the power level indicator via a group-common DCI, wherein the UE 100 is configured with one or more starting positions of block(s) in the DCI field or one or more indices of the block(s). That is the power level indicator is received via the group-common DCI according to the configured starting position(s)/block indices. As one field of the block may be configured to be the same for multiple UEs 100, the same CSI-RS are received by the UEs. Accordingly, the power level indicator may be signaled to the plurality of UEs 100 using the group-common DCI. Further, a UE 100 may be configured with multiple block corresponding to multiple CSI-RS receptions.

### First variation

In a first variation, the circuitry 120, in operation, determines whether the first power offset is a first value and/or whether the CSI-RS resource is indicated as not to be transmitted by the base station 200. In other words, the circuitry 120 determines whether the power level indicated by the power level indicator is the first value or whether or not the CSI-RS resource ON/OFF indication indicates that the CSI-RS resource shall not be transmitted by the base station 200 (CSI-RS resource OFF). Further, the circuitry 120 determines whether the CSI-RS is configured in a configuration of a TCI state. In other words, the circuitry 120 may determine whether the CSI-RS resource whose power level/CSI-RS resource ON/OFF indication is indicated by the power level indicator is associated with a TCI state.

If the first power offset is the first value and/or the power level indicator indicates CSI-RS resource OFF, the TCI state associated with the CSI-RS is expected not to be activated or indicated in a DCI. When said TCI state is already activated, the circuitry 120 may deactivate the TCI state.

The first value may be a value associated with CSI-RS resource OFF and may be, for example, zero W or minus infinity dB. However, the first value is not limited to said values and may be, for example, a predetermined or preconfigured value.

In other words, when the first power offset of a certain CSI-RS resource indicates the first value or the CSI-RS resource is indicated to be OFF and the CSI-RS resource is configured in an RRC configuration of TCI states, which is used for QCL with other channels (PDCCH/PDSCH), the OFF indication/first value causes the UE 100 to neither expect that the TCI states referring to the CSI-RS resource be activated, e.g. by MAC CE, nor to be indicated in an L1 TCI indication, e.g. in a DCI. Further, if the TCI state is already activated by MAC CE, the first value/OFF indication causes the UE 100 to deactivate the TCI states referring to the CSI-RS resource.

Accordingly, the interaction of the UE 100 with the TCI framework is brought into agreement with operations performed by the base station 200.

### Second variation

In a second variation, the circuitry 120 may perform at least one of the following operations after the transceiver 110 receives the power level indicator.

When the first power offset is a first value and/or the CSI-RS resource s indicated as not to be transmitted by the base station 200, the UE 100 may stop reporting of a CSI according to a CSI report configuration associated with the CSI-RS resource.

That is, when the first power offset of the CSI-RS is the first value, which may be minus infinity, zero, or the like, or a CSI-RS resource OFF indication is received (that is, when the CSI-RS resource will not be transmitted by the base station 200), the UE 100 does not perform CSI reporting regarding said CSI-RS. Accordingly, the UE 100 behavior is adapted to take energy saving measures performed by the base station 200 into account. Specifically, if a CSI-RS resource is not to be transmitted by the base station 200, the UE 100 does not perform respective CSI-RS reporting either. This may further lead to a reduction of energy consumption on the UE side.

When the first power offset of the CSI-RS is a value other than the first value and/or the power level indicator indicates that the CSI-RS resource is to be transmitted by the base station 200 (e.g. a CSI-RS resource ON indication is received), and the CSI-RS resource is part of a CSI report configuration, the UE 100 starts reporting the CSI associated with said CSI report configuration, when the CSI-RS resource is switched from OFF to ON (indicated by the power level indicator being a CSI-RS resource ON indication), or continues with reporting the CSI. This approach ensures that UE 100 behavior is in line with power saving procedures performed by the base station 200. In particular, it may be ensured that the base station 200 is provided with necessary CSI reporting by the UE 100.

When the UE 100 is configured with multiple sets of CSI report configurations, the UE 100 may switch between said multiple CSI report configurations sets. The switching may be based on the CSI-RS recourse set group index which is indicated as ON (by the power level indicator indicating that the CSI-RS resource is to be transmitted by the base station 200; CSI-RS resource ON indication) and/or a first power offset other than the first value (e.g. other than minus infinity or zero). The multiple CSI configurations may relate to reported values, namely, for example, LI, CQI, RI, PMI, L1-RSRP and/or L1-SINR and, optionally the codebook for PMI.

The number and/or size of CSI reports transmitted by the UE 100 may be semi-static or dynamic. In the semi-static case, the UE reports CSI based on a fixed or configured set or number of CSI report configurations only. That is, the size of the CSI report is kept aligned between the base station 200 and the UE 100. In the dynamic case, the UE adjusts the size of the CSI report based on the CSI-RS indicated as being ON (by the power level indicator being a CSI-RS resource ON indication) or the number of CSI-RS resource set groups indicated as being ON.

### Third variation

In a third variation, the circuitry 120 operates according to the power level and or according to whether or not the CSI-RS resource is to be transmitted by the base station in a finite period after reception of the power level indicator.

In other words, the first offset and/or the CSI-RS resource ON/OFF indication is applied in a time period of finite length that starts at a certain time after the power level indicator is received. For example, the indication may start to apply after a fixed or RRC/SIB configured time period after the slot within which the UE 100 has received the power level indicator. The duration of the finite time period may also be either fixed or RRC/SIB configured, for example.

That is, any operation performed by the UE 100 that is triggered by or depends on the power level indicator may only be performed in a certain period of time. For example, in view oif the second variation described above, the UE 100 may not perform CSI reporting when the CSI-RS resource OFF indication is received in the mentioned time period only. However, the present disclosure is not limited to not performing CSI reporting in the time period depending on the indication of the power level indicator, but may perform any procedure described that depends on the power level indicator.

The time period may be set/defined by a first time that is started upon reception of the power level indicator. After said first time has expired, the UE 100 may start a second timer having a runtime equal to the duration of the time period. That is, the time period is set as the period during which the second timer is running and has not expired.

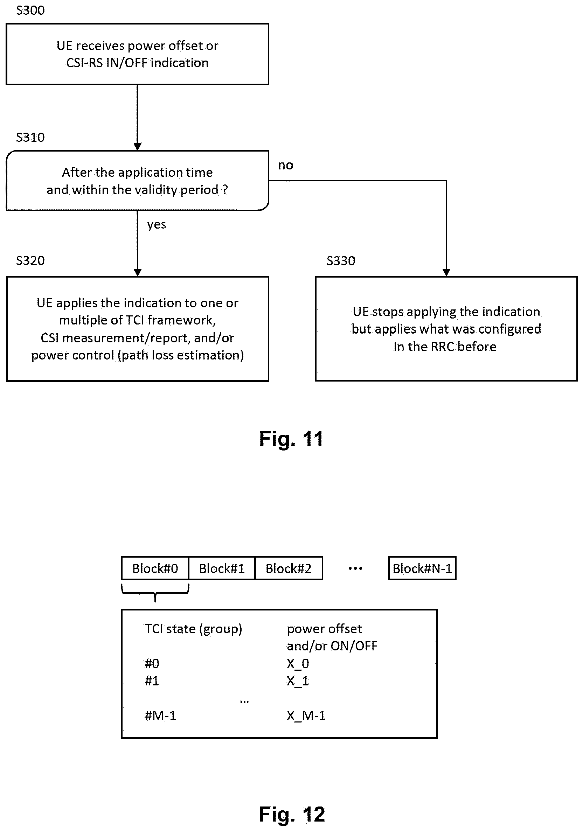

**Fig. 11** is a flow chart illustrating exemplary steps performed by a UE 100, wherein the circuitry 120 operates according to the power level and or according to whether or not the CSI-RS resource is to be transmitted by the base station in a finite period after reception of the power level indicator.

In step S300, the UE receives a power level indicator from a base station 200. The power level indicator indicates a power offset of a CSI-RS resource and/or whether or not the CSI-RS is to be transmitted by the base station 200 (i.e. a CSI-RS resource ON/OFF indication). The power offset may be the first power offset and/or a second power offset described further below. In step S310, the circuitry 120 determines whether a current time is after an application time and within a validity period. The application time is a time from reception of the power level indicator and indicates a starting to of a time period, namely a validity period. When the current time is within the validity period (yes in step S310), the method proceeds to step S320. In step S320, the indicated power offset and/or the indicated CSR-RS resource ON/OFF indication is applies in one or more of the TCI framework, CSI measurement and report, and/or path loss estimation and uplink power control, as described above. When the current time is not after the application time and within the validity period (no in step S310), the method proceeds to step S330. In step S330, the UE 100 stops applying the power offset and/or the CSR-RS resource ON/OFF indication. Instead, the UE 100 applies whatever was configured before reception of the power level indicator.

This approach allows the operations to be performed by the UE 100 to be limited to a specific time period. Thus, a further indication, e.g. for continuing/starting CSI reporting, is not required to be transmitted by the base station 200.

### Fourth variation

In a fourth variation, the transceiver 110, in operation, receives the CSI-RS resource. The circuitry 120, in operation, calculates a path loss estimate using the first power offset and a received power of the CSI-RS resource. Further, the circuitry 120, in operation, performs uplink power control according to the calculated path loss estimate.

In particular, the resulting path loss estimate may be used in uplink power control of one or more of a physical uplink shared channel, PUSCH, a physical uplink control channel, PUCCH, a sounding reference signal, SRS, and/or a physical random access channel, PRACH.

In this manner, the UE may reduce its energy consumption, as said uplink transmissions may be performed using a reduced transmitted power.

### Second embodiment

In a second embodiment, the UE 100 comprises a transceiver 110 which, in operation, receives a power level indicator from a base station 200, wherein the power level indicator indicates a power level of a Channel Status Information-Reference Signal, CSI-RS, resource and/or whether or not the CSI-RS resource is to be transmitted by the base station 200. The UE 100 further comprises circuitry 120 which, in operation, operates according to the power level and/or according to whether or not the CSI-RS resource is to be transmitted by the base station. In particular, the power level represents a power offset between a transmitted power of the CSI-RS resource and a transmitted power of a physical downlink shared channel, PDSCH.

In the following, the power offset between the transmitted power of the CSI-RS and a transmitted power of a PDSCH is referred to as a second power offset. The indication whether the CSI-RS resource is to be transmitted by the base station 200 is also referred as a CSI-RS resource ON/OFF indication. That is, the power level indicator may indicate the second power offset and/or the CSI-RS resource ON/OFF indication. The power level indicator is not required to indicate the power level/the CSI-RS resource ON/OFF indication directly, but may represent a value that is associated with a (as predetermined or configured) second power offset value or power offset resource ON/OFF indication.

That is, the UE 100 is provided with information on a difference (second power offset) between the transmitted power of the CSI-RS and a PDSCH. Similarly to the first embodiment, the transmitted power may be the power used to transmit the respective radio signal from the base station 200 to the UE 100. It may be measured in Watts (W), decibels (dB) or any other suitable unit. The power of the respective signal as received by the UE 100 is referred to as received power.

The power level indicator indicates the offset (difference) between the transmitted power of the CSI-RS and the transmitted power of the PDSCH and may also be measured using W, dB or the like.

In the second embodiment, the power level indicator may be signaled to the UE 100 in the same or similar manner as in the first embodiment, wherein the power offset indicated by the power level indicator does not relate to the first power offset, but to the second power offset. That is, the power level indicator may be signaled/transmitted to the UE in the same or similar manner as escribed above with reference to **Fig. 10****.**

Further, the second offset may indicate offset values as described for the first embodiment. In particular, the second power offset may be indicated as a relative offset or an absolute offset. In addition, the power level may be indicated in an open-loop or in a closed-loop manner.

However, the second power offset value may be either negative or positive. Whereas a negative second power offset value may indicate a power reduction of the CSI-RS resource, a positive second power offset may indicate a power reduction of the PDSCH.

### Variations

Variations of the second embodiment are provided according to the first to third variation of the first embodiment, wherein the first power offset is replaced with the second power offset.

That is, in a variation of the second embodiment corresponding to the first variation of the first embodiment, the circuitry 120 may determine whether the second power offset is a first value and/or the CSI-RS resource is indicated as not to be transmitted, and whether the CSI-RS resource is configured in a configuration of a Transmission Configuration Indication, TCI, state. If the circuitry 120 determines that the second power offset is a first value and/or the CSI-RS resource is indicated as not to be transmitted, and that the CSI-RS resource is configured in a configuration of a Transmission Configuration Indication, TCI, state, the circuitry 120 expects said TCI state not to be activated or indicated in a DCI, or, when said TCI state is activated, deactivates said TCI state.

Further, in a variation of the second embodiment corresponding to the second variation of the first embodiment, the circuitry 120, after the transceiver 110 receives the power level indicator, performs at least one of the operations described.

In particular, the circuitry 120 may, when the second power offset is a first value and/or the CSI-RS resource is indicated as not to be transmitted, stop reporting of a CSI according to a CSI report configuration associated with the CSI-RS resource.

Further, the circuitry 120 may, when the second power offset is a value different from the first value and/or the CSI-RS resource is indicated as to be transmitted, start with or continue with reporting of a CSI according to a CSI report configuration associated with the CSI-RS resource. When performing CSI reporting, the UE 100 may take the second power offset value into account when calculating the CSI values. This may be done for any one or any combination of LI, CQI, PMI and/or Rl. In other words, when determining said values, the circuitry 120 takes the second power offset into account.

That is, in other words, when the power level represent the second power offset, namely between the transmitted power of the CSI-RS and the transmitted power of the PDSCH, and the circuitry starts to or continues with reporting of the CSI after the transceiver 110 receives the power level indicator, the circuitry 120, in operation, may determine values included in the CSI using the second power offset.

Further, the circuitry 120 may switch between multiple CSI report configuration sets based on the power level indicator.

In a variation of the second embodiment corresponding to the third variation of the first embodiment, the circuitry, in operation, may operate according to the power level and/or according to whether or not the CSI-RS resource is transmitted by the base station 200 in a finite time period after reception of the power level indicator.

### Third embodiment

In the third embodiment, a UE 100 comprises a transceiver 110 which, in operation, receives a power level indicator from a base station 200, wherein the power level indicator indicates a power level of a Channel Status Information-Reference Signal, CSI-RS, resource and/or whether or not the CSI-RS resource is to be transmitted by the base station 200. Further, the UE 100 comprises circuitry 120 which, in operation, operates according to the power level and/or according to whether or not the CSI-RS resource is to be transmitted by the base station 200.

In particular, the power level may represent a power offset between a transmitted power of the CSI-RS resource and a transmitted power of a synchronization signal, i.e. the first power offset. Alternatively, the power level may represent a power offset between a transmitted power of the CSI-RS resource and a transmitted power of a physical downlink shared channel, PDSCH, i.e. the second power offset. Alternatively, the power level may represent the first power offset and the second power offset.

Further, in particular, each of one or more Transmission Configuration Indication, TCI, states is associated with a power level and/or whether a respective CSI-RS resource is to be transmitted. The transceiver 110, in operation, receives a TCI state indicator as the power level indicator.

In the third embodiment, the UE 100 receives the power level indicator via a group-common DCI. However, the present disclosures is not limited thereto, the power level indicator may be received via a UE-specific DCI, a group-common DCI or a MAC CE.

Similarly to the first embodiment, the UE 100 is configured with one or more starting positions of one or more blocks in a DCI and/or one or more indices of the block. The power level indicator is received via the DCI according to the starting position and/or the one or more indices of the block. In each block, the number of TCI state groups, group ID per CSI-RS resource set and bit-width of the indication for each group are RRC configurable.

**Fig. 12** is a schematic drawing illustrating an example of signaling the power level indicator via a group-common DCI according to the third embodiment. The UE is configured with a correspondence relationship between one or more TCI state groups and respective one or more first and/or second power offsets and/or CSI-RS resource ON/OFF indications. In other words, each TCI state group is associated with a first and/or second power offset and/or whether or not the CSI-RS resource is to be transmitted by the base station 200. Said correspondence relationship may be fixed or RRC configured, for example.

That is, for each indication field of each block and each TCI state group, candidate values of the CSI-RS resource ON/OFF indication and/or the first power offset as selected or indicated by DCI can be fixed or RRC configured.

A mapping relation between TCI state groups and respective CSI-RS resources may be based on a current RRC configuration. Candidate values may be any one of the candidate values described in the first embodiment. That is, a candidate value equal to a first value (e.g. minus infinity or zero) may indicate that the CSI-RS resource is not to be transmitted by the base station. Further, other offset values may indicate respective first and/or second power offsets. The power offset may be determined in a relative or absolute manner, in an open-loop or closed-loop manner.

### First variation

In a first variation, the circuitry 120, in operation, determines whether the power offset (first or second power offset) is a first value and/or whether the CSI-RS resource is indicated as not to be transmitted by the base station 200. In other words, the circuitry 120 determines whether the power offset indicated by the power level indicator is the first value or whether or not the CSI-RS resource ON/OFF indication indicates that the CSI-RS resource shall not be transmitted by the base station 200 (CSI-RS resource OFF). Further, the circuitry 120 determines whether the CSI-RS is configured in a configuration of a TCI state. Said TCI state may correspond to the TCI state indicated by the received TCI state indicator. In other words, the circuitry 120 may determine the CSI-RS resource associated with the TCI state group whose power level/CSI-RS resource ON/OFF indication is indicated by the power level indicator.

If the first/second power offset is the first value and/or the power level indicator indicates CSI-RS resource OFF, the TCI state associated with the CSI-RS is expected not to be activated, e.g. by a MAC CE, or indicated in a DCI. When said TCI state is already activated, the circuitry 120 may deactivate the TCI state.

The first value may be a value associated with CSI-RS resource OFF and may be, for example, zero W or minus infinity dB. However, the first value is not limited to said values and may be, for example, a predetermined or preconfigured value.

In other words, when the first/second power offset of a certain CSI-RS resource associated with the TCI state indicates the first value or the CSI-RS resource is indicated to be OFF an the CSI-RS resource is configured in an RRC configuration of TCI states, which is used for QCL with other channels (PDCCH/PDSCH), the OFF indication/first value causes the UE 100 to neither expect that the TCI states indicated by the TCI state indicator to be activated, e.g. by MAC CE, nor to be indicated in an L1 TCI indication, e.g. in a DCI. Further, if the TCI state is already activated by MAC CE, the first value/OFF indication causes the UE 100 to deactivate the TCI states referring to the CSI-RS resource.

If a TCI state indicated by the TCI state indicator has already been indicated by UE-specific DCI to apply a QCL for other channels (e.g. PDCCH and/or PDSCH), a TCI state indicator indicating a TCI state associated with the CSI-RS resource not to be transmitted by the base station 200 (i.e. CSI-RS resource OFF indication), the UE 100 does not apply the indicated TCI state. In this case, the UE 100 may switch to a backup or default TCI state that may be RRC configured or fixed. Further, for this purpose, a mapping between TCI states and respective backup or default TCI states may be RRC configured or fixed.

Accordingly, the interaction of the UE 100 with the TCI framework is brought into agreement with operations performed by the base station 200.

### Second variation

In a second variation, the circuitry 120 may perform at least one of the following operations after the transceiver 110 receives the power level indicator.

When the power offset (first or second power offset) associated with the TCI sate indicated by the TCI state indicator is a first value and/or it is associated with the TCO state that the CSI-RS resource is not to be transmitted by the base station 200, the UE 100 may stop reporting of a CSI according to a CSI report configuration associated with said CSI-RS resource.

That is, when the first/second power offset associated with the indicated TCI state is the first value, which may be minus infinity, zero, or the like, or a CSI-RS resource OFF indication is associated with a TCI state indicted by the received TCI state indicator (that is, when the CSI-RS resource will not be transmitted by the base station 200), the UE 100 does not perform CSI reporting regarding said CSI-RS. Accordingly, the UE 100 behavior is adapted to take energy saving measures performed by the base station 200 into account. Specifically, if a CSI-RS resource is not to be transmitted by the base station 200, the UE 100 does not perform respective CSI-RS reporting either. This may further lead to a reduction of energy consumption on the UE side.

When the first/second power offset of the CSI-RS associated with the indicated TCI state is a value other than the first value and/or it is associated with the TCI state that the CSI-RS resource is to be transmitted by the base station 200 (e.g. the TCI state indicator represents a CSI-RS resource ON indication), and the CSI-RS resource is part of a CSI report configuration, the UE 100 starts reporting the CSI associated with said CSI report configuration, when the CSI-RS resource is switched from OFF to ON (indicated by the power level indicator representing a CSI-RS resource ON indication), or continues with reporting the CSI. This approach ensures that UE 100 behavior is in line with power saving procedures performed by the base station 200. In particular, it may be ensured that the base station 200 is provided with necessary CSI reporting by the UE 100.

When the UE 100 is configured with multiple sets of CSI report configurations, the UE 100 may switch between said multiple CSI report configurations sets. The switching may be based on the TCI state linked with a CSI-RS which is indicated as ON (by the power level indicator indicating a TCI state associated with that the CSI-RS resource is to be transmitted by the base station 200; CSI-RS resource ON indication) and/or a first/second power offset other than the first value (e.g. other than minus infinity or zero). The multiple CSI configurations may relate to reported values, namely, for example, LI, CQI, RI, PMI, L1-RSRP and/or L1-SINR and, optionally the codebook for PMI.

The number and/or size of CSI reports transmitted by the UE 100 may be semi-static or dynamic. In the semi-static case, the UE reports CSI based on a fixed or configured set or number of CSI report configurations only. That is, the size of the CSI report is kept aligned between the base station 200 and the UE 100. In the dynamic case, the UE adjusts the size of the CSI report based on the CSI-RS indicated as being ON (by the power level indicator being a CSI-RS resource ON indication) or the number of CSI-RS resource set groups indicated as being ON.

### Further variations

Further variations of the third embodiment are provided according to the third and fourth variation of the first embodiment, wherein the power offset indicated is replaced with the power offset associated with the TCI state indicated by the TCI state indicator.

That is, in a variation of the third embodiment corresponding to the third variation of the first embodiment, the circuitry, in operation, may operate according to the power level and/or according to whether or not the CSI-RS resource is transmitted by the base station, as associated with the TCI state indicated by the TCI state indicator, in a finite time period after reception of the power level indicator.

That is, in a variation of the third embodiment corresponding to the fourth variation of the first embodiment, the transceiver 110, in operation, receives the CSI-RS resource. The circuitry 120, in operation, calculates a path loss estimate using the first power offset and a received power of the CSI-RS resource. Further, the circuitry 120, in operation, performs uplink power control according to the calculated path loss estimate.

In particular, the resulting path loss estimate may be used in uplink power control of one or more of a physical uplink shared channel, PUSCH, a physical uplink control channel, PUCCH, a sounding reference signal, SRS, and/or a physical random access channel, PRACH.

In this manner, the UE may reduce its energy consumption, as said uplink transmissions may be performed using a reduced transmitted power.

### Further embodiments

It is to be noted that, in the first to third embodiment, one of or a combination of the variations described may be combined.

In a further embodiment, provided us a UE, a base station and respective methods similar to the first embodiment, wherein the CSI-RS resource is substituted by SSB/PSS/SSS. Further, the first offset of the first embodiment may be replaced with a power offset from an SIB configured PSS EPRE or SSS EPRE.

In a further embodiment, the indications as described above may be transmitted in a UE-specific DCI, a cell-common DCI or a MAC CE.

In a further embodiment, the circuitry, in operation, determines whether the power level indicator has been successfully received. When it is determined that the power level indicator has not been received successfully, the transceiver, in operation, transmits an acknowledgement indicator indicating that the power level indicator has not been received successfully, and/or when it is determined that the power level indicator has been received successfully, the transceiver, in operation, transmits an acknowledgement indicator indicating that the power level indicator has been received successfully.

For example, HARQ-ACK feedback may be provided by the UE. In this respect, when the power level indicator is received via MAC CE, the UE may follow a usual HARQ-ACK procedure. If the power level indicator is received via UE-specific DCI or via group-common DCI, the HARQ-ACK feedback may follow a PUCCH resource indication in the DCI and/or an RRC configured resource. When the power level indicator is transmitted via a group-common DCI, the UE may only provide NACK feedback, whose resource follows a PUCCH resource indication in the DCI, and/or an RRC configured resource is used. With this approach, uplink traffic may be reduced, as the NACK response is only transmitted by the UE in a case where the power level transmission is not received successfully and a re-transmission of the power level indicator may be performed by the base station.

Further, for example, when there are two potential candidate values of the power level indicator configured by RRC configuration, just CSI-RS resource ON/OFF indication may be supported. That is, the power level indicator may indicate whether or not the CSI-RS is to be transmitted by the base station. On the other hand, when more than two values are configured by RRC, multiple power offset values may be included or defined.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a user equipment, UE, is provided. The UE comprises a transceiver which, in operation, receives a power level indicator from a base station. The power level indicator indicates a power level of a Channel Status Information-Reference Signal, CSI-RS, resource and/or whether or not the CSI-RS resource is to be transmitted by the base station. The UE further comprises circuitry which, in operation, operates according to the power level and/or according to whether or not the CSI-RS resource is to be transmitted by the base station.

According to a second aspect, provided is a UE according to the first aspect, wherein the power level represents a power offset between a transmitted power of the CSI-RS resource and a transmitted power of a synchronization signal.

According to a third aspect, provided is a UE according to the second aspect, wherein each of one or more Transmission Configuration Indication, TCI, states is associated with a power level and/or whether a respective CSI-RS resource is to be transmitted. The receiver, in operation, receives a TCI state indicator as the power level indicator.

According to a fourth aspect, provided is a UE according to the second aspect, wherein each of one or more CSI-RS resource sets is associated with a power level and/or whether a respective CSI-RS resource is to be transmitted. The transceiver, in operation, receives a CSI-RS resource set indicator indicating a CSI-RS resource set as the power level indicator.

According to a fifth aspect, provided is a UE according to any one of the second to fourth aspect, wherein the transceiver, in operation, receives the CSI-RS resource. The circuitry, in operation, calculates a path loss estimate using the power offset and a received power of the CSI-RS resource, and performs uplink power control according to the calculated path loss estimate.

According to a sixth aspect, provided is a UE according to the first aspect, wherein the power level represents a power offset between a transmitted power of the CSI-RS resource and a transmitted power of a physical downlink shared channel, PDSCH.

According to a seventh aspect, provided is a UE according to any one of the second to seventh aspect, wherein if the circuitry, in operation, determines that (i) the power offset is a first value and/or the CSI-RS resource is indicated as not to be transmitted, and (ii) the CSI-RS resource is configured in a configuration of a Transmission Configuration Indication, TCI, state, the circuitry expects said TCI state not to be activated or indicated in a DCI, or, when said TCI state is activated, deactivates said TCI state.

According to an eighth aspect, provided is a UE according to any one of the second to seventh aspect, wherein after the transceiver receives the power level indicator, the circuitry, in operation, performs at least one of the operations: (i) when the power offset is a first value and/or the CSI-RS resource is indicated as not to be transmitted, stopping reporting of a CSI according to a CSI report configuration associated with the CSI-RS resource; (ii) when the power offset is a value different from the first value and/or the CSI-RS resource is indicated as to be transmitted, starting of or continuing with reporting of a CSI according to a CSI report configuration associated with the CSI-RS resource; (iii) switching between multiple CSI report configuration sets based on the power level indicator.

According to a ninth aspect, provided is a UE according to the eighth aspect, wherein when the power level represent the power offset between the transmitted power of the CSI-RS and the transmitted power of the PDSCH and the circuitry starts to or continues with reporting of the CSI after the transceiver receives the power level indicator, the circuitry, in operation, determines values included in the CSI using the power offset.

According to a tenth aspect, provided is a UE according to any one of the first to ninth aspect, wherein the circuitry, in operation, operates according to the power level and/or according to whether or not the CSI-RS resource is transmitted by the base station in a finite time period after reception of the power level indicator.

According to an eleventh aspect, provided is a UE according to any one of the first to tenth aspect, wherein the power level indicator is received via a group-common downlink control indicator, DCI, a UE-specific DCI, a cell-common DCI or a Medium Access Control-Control Element, MAC-CE.

According to a twelfth aspect, provided is a UE according to any one of the first to tenth aspect, wherein the UE is configured with a starting position of a block in a downlink control indicator, DCI, and/or one or more indices of the block. The power level indicator is received via the DCI according to the starting position and/or the one or more indices of the block.

According to a thirteenth aspect, provided is a UE according to any one of the first to twelfth aspect, wherein the circuitry, in operation, determines whether the power level indicator has been successfully received. When it is determined that the power level indicator has not been received successfully, the transceiver, in operation, transmits an acknowledgement indicator indicating that the power level indicator has not been received successfully, and/or when it is determined that the power level indicator has been received successfully, the transceiver, in operation, transmits an acknowledgement indicator indicating that the power level indicator has been received successfully.

According to a fourteenth aspect, provided is a method for a user equipment, UE, the method comprising the steps of: (i) receiving a power level indicator from a base station, wherein the power level indicator indicates a power level of a Channel Status Information-Reference Signal, CSI-RS, resource and/or whether the CSI-RS resource is to be transmitted by the base station; and (ii) operating according to the power level and/or according to whether or not the CSI-RS resource is to be transmitted by the base station.

According to a fifteenth aspect, provided is a method according to the fourteenth aspect, wherein the power level represents a power offset between a transmitted power of the CSI-RS resource and a transmitted power of a synchronization signal.

According to a sixteenth aspect, provided is a method according to the fifteenth aspect, wherein each of one or more Transmission Configuration Indication, TCI, states is associated with a power level and/or whether a respective CSI-RS resource is to be transmitted. A TCI state indicator is received as the power level indicator.

According to a seventeenth aspect, provided is a method according to the fifteenth aspect, wherein each of one or more CSI-RS resource sets is associated with a power level and/or whether a respective CSI-RS resource is to be transmitted. A CSI-RS resource set indicator indicating a CSI-RS resource set is received as the power level indicator.

According to an eighteenth aspect, provided is a method according to any one of the fifteenth to seventeenth aspect, further comprising the steps of receiving the CSI-RS resource; calculating a power loss estimate using the power offset and a received power of the CSI-RS resource; and performing uplink power control according to the calculated path loss estimate.

According to a nineteenth aspect, provided is a method according to the fourteenth aspect, wherein the power level represents a power offset between a transmitted power of the CSI-RS resource and a transmitted power of a physical downlink shared channel, PDSCH.

According to a twentieth aspect, provided is a method according to any one of the fifteenth to twentieth aspect, wherein if it is determined that (i) the power offset is a first value and/or the CSI-RS resource is indicated as not to be transmitted, and (ii) the CSI-RS resource is configured in a configuration of a Transmission Configuration Indication, TCI, state, said TCI state is expected not to be activated or indicated in a DCI, or, when said TCI state is activated, said TCI state is deactivated.

According to a twenty-first aspect, provided is a method according to any one of the fifteenth to twentieth aspect, wherein after the power level indicator is received, at least one of the following operations is performed: (i) when the power offset is a first value and/or the CSI-RS resource is indicated as not to be transmitted, stopping reporting of a CSI according to a CSI report configuration associated with the CSI-RS resource; (ii) when the power offset is a value different from the first value and/or the CSI-RS resource is indicated as to be transmitted, starting of or continuing with reporting of a CSI according to a CSI report configuration associated with the CSI-RS resource; (iii) switching between multiple CSI report configuration sets based on the power level indicator.

According to a twenty-second aspect, provided is a method according to the twenty-first aspect, wherein when the power level represent the power offset between the transmitted power of the CSI-RS and the transmitted power of the PDSCH and it is started to or continued with reporting of the CSI after the power level indicator is received, values included in the CSI are determined using the power offset.

According to a twenty-third aspect, provided is a method according to any one of the fourteenth to twenty-second aspect, wherein it is operated according to the power level and/or according to whether or not the CSI-RS resource is transmitted by the base station in a finite time period after reception of the power level indicator.

According to a twenty-fourth aspect, provided is a method according to any one of the fourteenth to twenty-third aspect, wherein the power level indicator is received via a group-common downlink control indicator, DCI, a UE-specific DCI, a cell-common DCI or a Medium Access Control-Control Element, MAC-CE.

According to a twenty-fifth aspect, provided is a method according to any one of the fourteenth to twenty-third aspect, wherein the UE is configured with a starting position of a block in a downlink control indicator, DCI, and/or one or more indices of the block. The power level indicator is received via the DCI according to the starting position and/or the one or more indices of the block.

According to a twenty-sixth aspect, provided is a method according to any one of the fourteenth to twenty-fifth aspect, further comprising the step of determining whether the power level indicator has been successfully received. When it is determined that the power level indicator has not been received successfully, acknowledgement indicator indicating that the power level indicator has not been received successfully is transmitted, and/or when it is determined that the power level indicator has been received successfully, an acknowledgement indicator indicating that the power level indicator has been received successfully is transmitted.

According to a twenty-seventh aspect, provided is a base station. The base station comprises circuitry which, in operation, determines a power level of a Channel Status Information Reference Signal, SCI-RS, resource and/or whether or not the CSI-RS resource is to be transmitted by the base station. Further, the base station comprises a transceiver which, in operation transmits a power level indicator to a user equipment, UE, wherein the power level indicator indicates the power level of the CSI-RS resource and/or whether or not the CSI-RS resource is to be transmitted by the base station

According to a twenty-eighth aspect, provided is a base station according to the twenty-seventh aspect, wherein the power level represents a power offset between a transmitted power of the CSI-RS resource and a transmitted power of a synchronization signal.

According to a twenty-ninth aspect, provided is a base station according to the twenty-eighth aspect, wherein each of one or more Transmission Configuration Indication, TCI, states is associated with a power level and/or whether a respective CSI-RS resource is to be transmitted. The transceiver, in operation, transmits a TCI state indicator as the power level indicator.

According to a thirtieth aspect, provided is a base station according to the twenty-eighth aspect, wherein each of one or more CSI-RS resource sets is associated with a power level and/or whether a respective CSI-RS resource is to be transmitted. The transceiver, in operation, transmits a CSI-RS resource set indicator indicating a CSI-RS resource set as the power level indicator.

According to a thirty-first aspect, provided is a base station according to any one of the twenty-eighth to thirtieth aspect, wherein the transceiver, in operation, transmits the CSI-RS resource.

According to a thirty-second aspect, provided is a base station according to the twenty-seventh aspect, wherein the power level represents a power offset between a transmitted power of the CSI-RS resource and a transmitted power of a physical downlink shared channel, PDSCH.

According to a thirty-third aspect, provided is a base station according to any one of the twenty-seventh to thirty-second aspect, wherein the power level indicator is transmitted via a group-common downlink control indicator, DCI, a UE-specific DCI, a cell-common DCI or a Medium Access Control-Control Element, MAC-CE.

According to a thirty-fourth aspect, provided is a base station according to any one of the twenty-seventh to thirty-second aspect, wherein the UE is configured with a starting position of a block in a downlink control indicator, DCI, and/or one or more indices of the block. The transceiver, in operation, transmits the power level indicator via the DCI according to the starting position and/or the one or more indices of the block.

According to a thirty-fifth aspect, provided is a base station according to any one of the twenty-seventh to thirty-fourth aspect, wherein the transceiver, in operation, receives an acknowledgement indicator indicating that the power level indicator has not been received successfully by the UE and/or receives an acknowledgement indicator indicating that the power level indicator has been received successfully by the UE.

According to a thirty-sixth aspect, provided is a method for a base station, the method comprising the steps of: (i) determining a power level of a Channel Status Information Reference Signal, CSI-RS, resource and/or whether or not the CSI-RS resource is to be transmitted by the base station; (ii) transmitting a power level indicator to a user equipment, UE, wherein the power level indicator indicates the power level of the CSI-RS resource and/or whether or not the CSI-RS resource is to be transmitted by the base station.

According to a thirty-seventh aspect, provided is a method according to the thirty-sixth aspect, wherein the power level represents a power offset between a transmitted power of the CSI-RS resource and a transmitted power of a synchronization signal.

According to a thirty-eighth aspect, provided is a method according to the thirty-seventh aspect, wherein each of one or more Transmission Configuration Indication, TCI, states is associated with a power level and/or whether a respective CSI-RS resource is to be transmitted. The method further comprises the step of transmitting a TCI state indicator as the power level indicator.

According to a thirty-ninth aspect, provided is a method according to the thirty-seventh aspect, wherein each of one or more CSI-RS resource sets is associated with a power level and/or whether a respective CSI-RS resource is to be transmitted. The method further comprises the step of transmitting a CSI-RS resource set indicator indicating a CSI-RS resource set as the power level indicator.

According to a fortieth aspect, provided is a method according to any one of the thirty-seventh to thirty-ninth aspect, wherein the method further comprises the step of transmitting the CSI-RS resource.

According to a forty-first aspect, provided is a method according to the thirty-sixth aspect, wherein the power level represents a power offset between a transmitted power of the CSI-RS resource and a transmitted power of a physical downlink shared channel, PDSCH.

According to a forty-second aspect, provided is a method according to any one of the thirty-sixth to forty-first aspect, wherein the power level indicator is transmitted via a group-common downlink control indicator, DCI, a UE-specific DCI, a cell-common DCI or a Medium Access Control-Control Element, MAC-CE.

According to a forty-third aspect, provided is a method according to any one of the thirty-sixth to forty-first aspect, wherein the UE is configured with a starting position of a block in a downlink control indicator, DCI, and/or one or more indices of the block. The method further comprises the step of transmitting the power level indicator via the DCI according to the starting position and/or the one or more indices of the block.

According to a forty-fourth aspect, provided is a method according to any one of the thirty-sixth to forty-third aspect, wherein the method further comprises the step the step of receiving an acknowledgement indicator indicating that the power level indicator has not been received successfully by the UE and/or receiving an acknowledgement indicator indicating that the power level indicator has been received successfully by the UE.

Summarizing, provided are a user equipment, UE, a base station, and corresponding methods for a user equipment and a base station. The UE comprises a transceiver which, in operation, receives a power level indicator from a base station, wherein the power level indicator indicates a power level of a Channel Status Information-Reference Signal, CSI-RS, resource and/or whether or not the CSI-RS resource is to be transmitted by the base station. The UE further comprises circuitry which, in operation, operates according to the power level and/or according to whether or not the CSI-RS resource is to be transmitted by the base station.

## Claims

1. A user equipment, UE, comprising:
a transceiver which, in operation, receives a power level indicator from a base station, wherein
the power level indicator indicates a power level of a Channel Status Information-Reference Signal, CSI-RS, resource and/or whether or not the CSI-RS resource is to be transmitted by the base station; and
circuitry which, in operation, operates according to the power level and/or according to whether or not the CSI-RS resource is to be transmitted by the base station.

2. The UE according to claim 1, wherein
the power level represents a power offset between a transmitted power of the CSI-RS resource and a transmitted power of a synchronization signal.

3. The UE according to claim 2, wherein
each of one or more Transmission Configuration Indication, TCI, states is associated with a power level and/or whether a respective CSI-RS resource is to be transmitted, and
the transceiver, in operation, receives a TCI state indicator as the power level indicator.

4. The UE according to claim 2, wherein
each of one or more CSI-RS resource sets is associated with a power level and/or whether a respective CSI-RS resource is to be transmitted, and
the transceiver, in operation, receives a CSI-RS resource set indicator indicating a CSI-RS resource set as the power level indicator.

5. The UE according to any one of claims 2 to 4, wherein
the transceiver, in operation, receives the CSI-RS resource; and
the circuitry, in operation,
calculates a path loss estimate using the power offset and a received power of the CSI-RS resource, and
performs uplink power control according to the calculated path loss estimate.

6. The UE according to claim 1, wherein
the power level represents a power offset between a transmitted power of the CSI-RS resource and a transmitted power of a physical downlink shared channel, PDSCH.

7. The UE according to any one of claim 2 to 6, wherein
if the circuitry, in operation, determines that
- the power offset is a first value and/or the CSI-RS resource is indicated as not to be transmitted, and
- the CSI-RS resource is configured in a configuration of a Transmission Configuration Indication, TCI, state,
the circuitry expects said TCI state not to be activated or indicated in a DCI, or, when said TCI state is activated, deactivates said TCI state.

8. The UE according to any one of claims 2 to 7, wherein
after the transceiver receives the power level indicator, the circuitry, in operation, performs at least one of the operations:
- when the power offset is a first value and/or the CSI-RS resource is indicated as not to be transmitted, stopping reporting of a CSI according to a CSI report configuration associated with the CSI-RS resource;
- when the power offset is a value different from the first value and/or the CSI-RS resource is indicated as to be transmitted, starting of or continuing with reporting of a CSI according to a CSI report configuration associated with the CSI-RS resource;
- switching between multiple CSI report configuration sets based on the power level indicator.

9. The UE according to claim 8, wherein
when the power level represent the power offset between the transmitted power of the CSI-RS and the transmitted power of the PDSCH and the circuitry starts to or continues with reporting of the CSI after the transceiver receives the power level indicator, the circuitry, in operation, determines values included in the CSI using the power offset.

10. The UE according to any one of claims 1 to 9, wherein
the circuitry, in operation, operates according to the power level and/or according to whether or not the CSI-RS resource is transmitted by the base station in a finite time period after reception of the power level indicator.

11. The UE according to any one of claims 1 to 10, wherein
the power level indicator is received via a group-common downlink control indicator, DCI, a UE-specific DCI, a cell-common DCI or a Medium Access Control-Control Element, MAC-CE.

12. The UE according to any one of claims 1 to 10, wherein
the UE is configured with a starting position of a block in a downlink control indicator, DCI, and/or one or more indices of the block; and
the power level indicator is received via the DCI according to the starting position and/or the one or more indices of the block.

13. The UE according to any one of claims 1 to 12, wherein
the circuitry, in operation, determines whether the power level indicator has been successfully received; and
when it is determined that the power level indicator has not been received successfully, the transceiver, in operation, transmits an acknowledgement indicator indicating that the power level indicator has not been received successfully, and/or
when it is determined that the power level indicator has been received successfully, the transceiver, in operation, transmits an acknowledgement indicator indicating that the power level indicator has been received successfully.

14. A method for a user equipment, UE, the method comprising the steps of:
receiving a power level indicator from a base station, wherein
the power level indicator indicates a power level of a Channel Status Information-Reference Signal, CSI-RS, resource and/or whether the CSI-RS resource is to be transmitted by the base station; and
operating according to the power level and/or according to whether or not the CSI-RS resource is to be transmitted by the base station.

15. A base station, comprising:
circuitry which, in operation, determines a power level of a Channel Status Information Reference Signal, CSI-RS, resource and/or whether or not the CSI-RS resource is to be transmitted by the base station;
a transceiver which, in operation transmits a power level indicator to a user equipment, UE, wherein
the power level indicator indicates the power level of the CSI-RS resource and/or whether or not the CSI-RS resource is to be transmitted by the base station.
